# EUROPEAN PATENT APPLICATION

(11) **EP 4 656 495 A1**
(43) Date of publication of application: **03.12.2025**
(21) Application number: 24778641.1
(22) Date of filing: 29.01.2024
(51) Int. Cl.: B62D 5/07, B60P 1/16, B62D 5/087, F15B 20/00

(54) **TRANSPORT VEHICLE**

(30) Priority: 28.03.2023 JP 2023052354
(71) Applicant: Hitachi Construction Machinery Co., Ltd., Tokyo 110-0015 (JP)
(72) Inventor: SAKAGUCHI, Yoji, Tsuchiura-shi, Ibaraki 300-0013 (JP); SHIMOMURA, Hirokazu, Tsuchiura-shi, Ibaraki 300-0013 (JP)
(74) Representative: Manitz Finsterwald Patent- und Rechtsanwaltspartnerschaft mbB
(86) International application number: PCT/JP2024/002712
(87) International publication number: WO 2024/202495

(57) **Abstract**

A hauling vehicle includes a steering circuit having a steering cylinder steered by pressure oil from a hydraulic source, a steering valve that controls the flow of pressure oil to the steering cylinder, and an accumulator that stores pressure oil from the hydraulic source and can supply it to the steering cylinder via the steering valve. The steering circuit is connected to the hydraulic source and the hydraulic fluid tank via a composite control valve. The composite control valve has a first position for communication between the steering circuit and the hydraulic source and blocking communication between the steering circuit and the hydraulic fluid tank, and a second position for communication between the steering circuit and the hydraulic source and communication between the steering circuit and the hydraulic fluid tank. The composite control valve has a throttle in the oil passage that connects the steering circuit in the second position with the hydraulic fluid tank.

## Description

### Technical Field

The present invention relates to hauling vehicles such as dump trucks for mining, and more specifically, to a hauling vehicle equipped with a hydraulic circuit for steering wheels that includes an accumulator.

### Background Art

Hauling vehicles such as dump trucks steer the steering wheels using a hydraulic circuit in which hydraulic actuators are driven by pressure oil supplied from a hydraulic pump. The hydraulic circuit (steering circuit) for steering the steering wheels may include an accumulator as a safety device (emergency hydraulic source) in case the function of the hydraulic pump is lost. The accumulator stores pressure oil supplied from the hydraulic pump and can supply the stored pressure oil to the hydraulic actuator when the function of the hydraulic pump is lost. Therefore, even if there is no supply of pressure oil from the hydraulic pump, the supply of pressure oil stored in the accumulator allows the hydraulic actuator to operate, enabling the steering of the steering wheels.

The pressure oil stored in the accumulator needs to be released to the hydraulic fluid tank when the operation of the hauling vehicle is completely finished. Therefore, a bleed-down control valve is provided on the line connecting the accumulator and the hydraulic fluid tank (see, for example, Patent Document 1). The bleed-down control valve is configured to be switchable between an open position that communicates the accumulator with the hydraulic fluid tank and a closed position that blocks their communication. The bleed-down control valve performs a so-called bleed-down by switching from the closed position to the open position, releasing the pressure oil stored in the accumulator to the hydraulic fluid tank.

Additionally, some hauling vehicles are equipped with a hydraulic circuit for hoist operation to raise and lower the load-carrying platform, in addition to the steering hydraulic circuit. In such a configuration of hauling vehicles, there are those in which the supply destination of the pressure oil discharged from the hydraulic pump is switched between the steering hydraulic circuit and the hoist operation hydraulic circuit using a control valve (see, for example, Patent Document 1).

### Prior Art Documents

### Patent Documents

Patent Document 1: JP 2009-264456 A

### Summary of the Invention

### Problems to be Solved by the Invention

As in the hydraulic circuit described in Patent Document 1, there is a hydraulic circuit that includes two control valves: a bleed-down control valve that controls the release of pressure oil from the accumulator to the hydraulic fluid tank, and a control valve (priority valve) that controls the supply destination of the pressure oil from the hydraulic pump. In this hydraulic circuit, it is preferable to take fail-safe measures assuming that the bleed-down control valve and the priority valve may become unswitchable at unintended switching positions simultaneously. Specifically, if the priority valve becomes unswitchable at the switching position for hoist operation, and the bleed-down control valve becomes unswitchable at the open position (switching position that communicates the accumulator with the hydraulic fluid tank), the supply of pressure oil to the steering hydraulic circuit is cut off, and the release of pressure oil from the accumulator to the hydraulic fluid tank occurs simultaneously.

If such problems occur simultaneously, there is a concern that the function of the accumulator as a safety device will rapidly decline, leading to a state where steering the steering wheels becomes impossible. Therefore, it is preferable to take fail-safe measures assuming that the bleed-down control valve and the priority valve may become unswitchable at unintended switching positions simultaneously.

The present invention has been made to solve the above-mentioned problems. Its purpose is to provide a hauling vehicle that can avoid the simultaneous occurrence of pressure oil release from the accumulator of the steering circuit to the hydraulic fluid tank and the cutoff of pressure oil supply from the hydraulic source to the steering circuit.

### Means for Solving the Problems

The present application includes multiple means for solving the above problems. For example, the hauling vehicle of the present invention includes a hydraulic fluid tank for storing hydraulic fluid, a hydraulic source that supplies the hydraulic fluid in the hydraulic fluid tank as high-pressure oil, a steering circuit that includes a steering cylinder that extends and retracts to steer steering wheels with the pressure oil supplied from the hydraulic source, a steering valve that controls the flow of pressure oil supplied from the hydraulic source to the steering cylinder , and an accumulator that stores the pressure oil supplied from the hydraulic source and supplies the stored pressure oil to the steering cylinder. The steering circuit is configured to be connected to the hydraulic source and the hydraulic fluid tank via a composite control valve. The composite control valve has a first position that communicates the steering circuit with the hydraulic source and blocks the communication between the steering circuit and the hydraulic fluid tank. Additionally, the composite control valve has a second position that communicates the steering circuit with the hydraulic source and also communicates the steering circuit with the hydraulic fluid tank to discharge the pressure oil from the accumulator to the hydraulic fluid tank. Furthermore, the composite control valve has a throttle in the oil passage that communicates the steering circuit with the hydraulic fluid tank at the second position.

### Advantages of the Invention

According to the present invention, the second position of the composite control valve allows the steering circuit to release pressure oil (bleed-down) from the accumulator to the hydraulic fluid tank, and the hydraulic source becomes in a communication state. As a result, it becomes possible to supply pressure oil from the hydraulic source to the steering circuit side via the composite control valve. Furthermore, the throttle at the second position of the composite control valve acts as fluid resistance to the flow from the hydraulic source to the hydraulic fluid tank. Therefore, the simultaneous occurrence of pressure oil release from the accumulator of the steering circuit to the hydraulic fluid tank and the cutoff of pressure oil supply from the hydraulic source to the steering circuit is avoided. Other problems, configurations, and effects will be clarified by the description of the following embodiments.

### Brief Description of the Drawings

[FIG. 1] FIG. 1 is a side view of a dump truck as a hauling vehicle according to the first embodiment of the present invention.
[FIG. 2] FIG. 2 is a hydraulic circuit diagram showing the configuration of the hydraulic system provided in the hauling vehicle according to the first embodiment shown in FIG. 1.
[FIG. 3] FIG. 3 is a hydraulic circuit diagram showing the configuration of a comparative example hydraulic system for the hydraulic system of the hauling vehicle according to the first embodiment.
[FIG. 4] FIG. 4 is a hydraulic circuit diagram showing the configuration of the hydraulic system provided in the hauling vehicle according to a modification example of the first embodiment.
[FIG. 5] FIG. 5 is a hydraulic circuit diagram showing the configuration of the hydraulic system provided in the hauling vehicle according to the second embodiment of the present invention.
[FIG. 6] FIG. 6 is a hydraulic circuit diagram showing the configuration of the hydraulic system provided in the hauling vehicle according to the third embodiment of the present invention.
[FIG. 7] FIG. 7 is a hydraulic circuit diagram showing the configuration of the hydraulic system provided in the hauling vehicle according to the fourth embodiment of the present invention.
[FIG. 8] FIG. 8 is a hydraulic circuit diagram showing the configuration of the hydraulic system provided in the hauling vehicle according to other embodiments of the present invention.

### Modes for Carrying the Invention

Hereinafter, embodiments of the hauling vehicle of the present invention will be described with reference to the drawings. In this embodiment, a dump truck is given as an example of the hauling vehicle for explanation. It should be noted that the directions of front, rear, left, and right mentioned in this specification refer to the directions as seen from the operator on board the hauling vehicle.

### [First Embodiment]

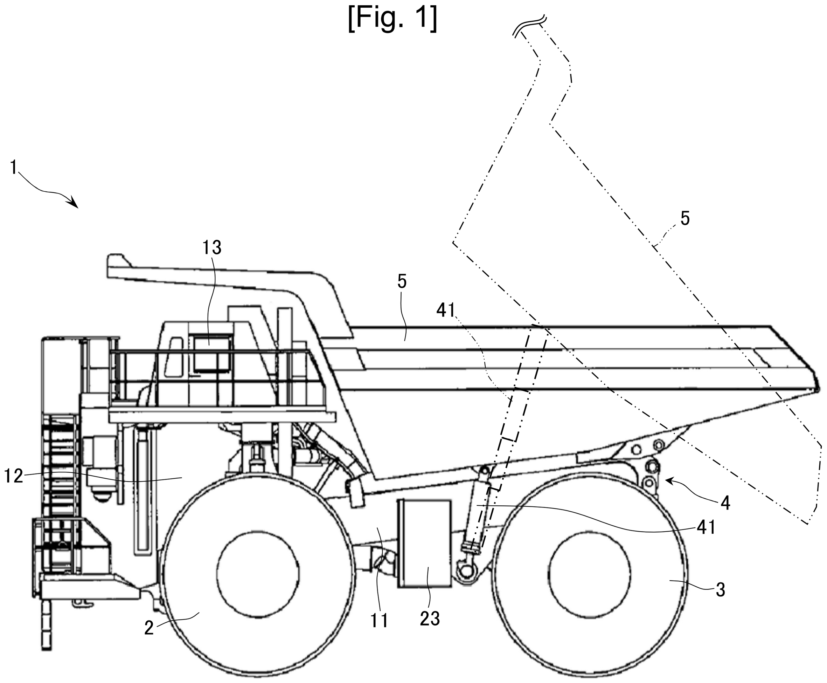

First, the configuration of the dump truck as a hauling vehicle according to the first embodiment will be described with reference to FIG. 1. FIG. 1 is a side view of a dump truck as a hauling vehicle according to the first embodiment of the present invention.

In FIG. 1, the dump truck 1 is a large hauling vehicle operating in mines and the like, and is used to transport loads (transport objects) such as mined ores and earth and sand. The dump truck 1 is equipped with front wheels 2 and rear wheels 3, which are rotatably arranged on both the left and right sides of the front and rear of the vehicle, a vehicle body 4 that can travel with the front wheels 2 and rear wheels 3, and a load-carrying platform 5 that is mounted on the vehicle body 4 and can be raised and lowered (tilted).

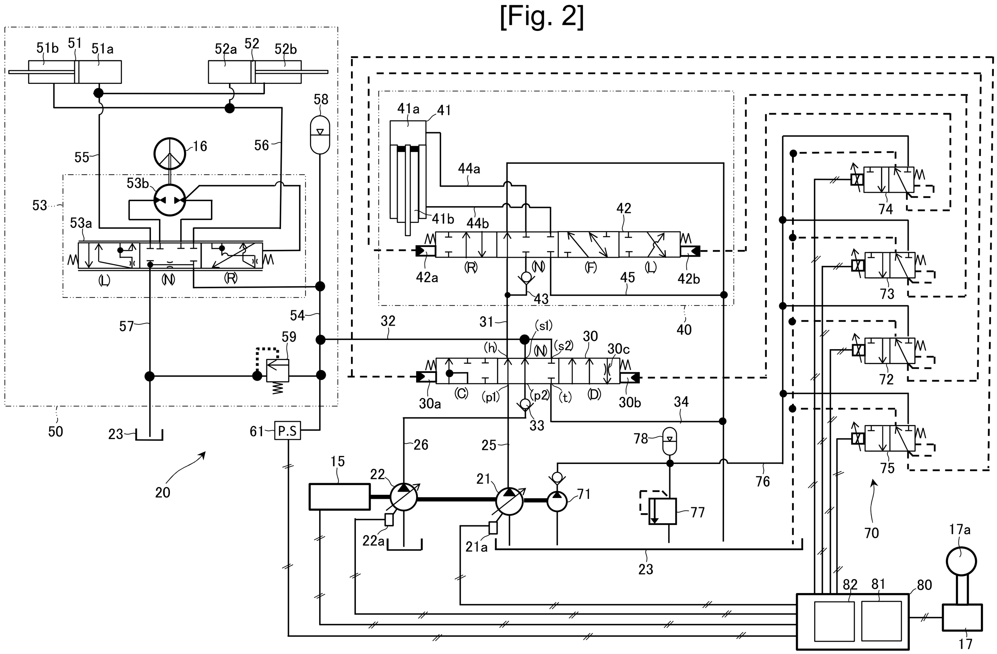

The front wheels 2 are, for example, steering wheels steered by the operator. The front wheels 2 as steering wheels are configured to be steered by the extension and retraction of the left and right steering cylinders 51, 52 (see FIG. 2 described later). The rear wheels 3 are, for example, drive wheels that are rotationally driven by a travel drive device (not shown).

The vehicle body 4 includes a frame 11, which is a support structure extending in the longitudinal direction (left-right direction in FIG. 1), a deck 12 arranged at the front of the frame 11, and a cab 13 arranged on the deck 12. Various devices such as a hydraulic fluid tank 23 (see also FIG. 2 described later) are attached to the frame 11. The deck 12 houses various devices such as the prime mover 15 and hydraulic pumps 21, 22 (see FIG. 2 described later). The cab 13 is an operating room where the operator boards and controls the vehicle. Inside the cab 13, various control devices for the operator to maneuver the dump truck 1 are arranged, including a travel pedal (not shown) for driving the dump truck 1, a steering wheel 16 (see FIG. 2 described later) for steering the front wheels 2 (steering wheels), and an operation device 17 (see FIG. 2 described later) for raising and lowering (posture) the load-carrying platform 5.

The load-carrying platform 5 is a container for loading cargo such as ore and earth and sand (transported objects). The load-carrying platform 5 is pivotally attached to the rear end of the frame 11 so that the front side can rotate vertically with the rear side as a fulcrum. A pair of hoist cylinders 41 (only one shown in FIG. 1) are interposed between the frame 11 and the load-carrying platform 5. The hoist cylinder 41 is a hydraulic actuator that extends and retracts by supplying and discharging pressure oil. The load-carrying platform 5 is lowered (seated state) by the contraction of the hoist cylinder 41, becoming a transport posture that allows loading of the transported object onto the load-carrying platform 5. Also, by the extension of the hoist cylinder 41, it is raised (tilted state), becoming a discharge posture that allows the transported object to be discharged from the load-carrying platform 5. And between the transport posture and the discharge posture, the load-carrying platform 5 is configured to rotate relative to the frame 11. In FIG. 1, the load-carrying platform 5 shown by the solid line is in the transport posture, and the load-carrying platform 5 shown by the two-dot chain line is in the discharge posture. Also, the hoist cylinder 41 shown by the solid line is in a contracted state, and the hoist cylinder 41 shown by the two-dot chain line is in an extended state.

Next, the hydraulic system of the hauling vehicle according to the first embodiment will be described with reference to FIG. 2. FIG. 2 is a hydraulic circuit diagram showing the configuration of the hydraulic system provided in the hauling vehicle according to the first embodiment shown in FIG. 1.

In FIG. 2, the dump truck 1 is equipped with a hydraulic system 20 for raising and lowering the load-carrying platform 5 and steering the front wheels 2. The hydraulic system 20 includes a first hydraulic pump 21 and a second hydraulic pump 22, which are hydraulic sources that supply hydraulic fluid as high-pressure oil, and a hydraulic fluid tank 23 for storing hydraulic fluid. Furthermore, the hydraulic system 20 includes a hoist circuit 40, which includes a pair of hoist cylinders 41 (only one shown in FIG. 2) driven by pressure oil supplied from the hydraulic source, and a steering circuit 50, which includes a pair of left and right steering cylinders 51, 52 driven by pressure oil supplied from the hydraulic source. The hoist circuit 40 is connected to the hydraulic source via a composite control valve 30. The steering circuit 50 is connected to the hydraulic source and the hydraulic fluid tank 23 via the composite control valve 30.

The first hydraulic pump 21 and the second hydraulic pump 22 are, for example, variable displacement pumps, each having regulators 21a, 22a. The regulators 21a, 22a adjust the pump volume based on control commands from the control device 80. The first hydraulic pump 21 and the second hydraulic pump 22 are driven by a prime mover 15, for example. The prime mover 15 is, for example, an engine or an electric motor. The prime mover 15 is driven by control commands from the control device 80. The first hydraulic pump 21 and the second hydraulic pump 22 are connected to the composite control valve 30 via the first discharge line 25 and the second discharge line 26, respectively.

The hoist cylinder 41 of the hoist circuit 40 is a single-stage or multi-stage (three-stage in FIGS. 1 and 2) hydraulic cylinder for raising and lowering the load-carrying platform 5 (see FIG. 1). The hoist cylinder 41 has a bottom-side oil chamber (hereinafter referred to as the bottom chamber) 41a and a rod-side oil chamber (hereinafter referred to as the rod chamber) 41b. The hoist cylinder 41 extends when pressure oil is supplied to the bottom chamber 41a and return oil is discharged from the rod chamber 41b. By the extension of the hoist cylinder 41, the load-carrying platform 5 assumes the discharge posture (two-dot chain line in FIG. 1). The hoist cylinder 41 contracts when pressure oil is supplied to the rod chamber 41b and return oil is discharged from the bottom chamber 41a. By the contraction of the hoist cylinder 41, the load-carrying platform 5 assumes the transport posture (solid line in FIG. 1).

The hoist circuit 40 further includes a hoist control valve 42. The hoist control valve 42 and the composite control valve 30 are arranged on a center bypass line 31, which is an oil passage connecting the first hydraulic pump 21 and the hydraulic fluid tank 23. The hoist control valve 42 is connected in tandem in a position downstream of the composite control valve 30. The hoist control valve 42 controls the flow of pressure oil supplied to the hoist cylinder 41 from the hydraulic sources 21, 22 via the composite control valve 30, and also controls the flow of return oil discharged from the hoist cylinder 41 to the hydraulic fluid tank 23. A supply oil passage 43 branching from the center bypass line 31 is connected to the hoist control valve 42. The hoist control valve 42 is connected to the bottom chamber 41a and the rod chamber 41b of the hoist cylinder 41 via a pair of actuator lines 44a, 44b. Additionally, the hoist control valve 42 is connected to the hydraulic fluid tank 23 via a return oil passage 45.

The hoist control valve 42 is constituted by a hydraulic pilot-type directional control valve with 6 ports and 4 positions, for example. The hoist control valve 42 is configured using a single directional control valve and has pressure receiving sections 42a, 42b where pilot pressure is input on both the left and right sides.

The hoist control valve 42 has four switching positions: a holding position which is a neutral position N, a raising position R, a lowering position L, and a floating position F. The hoist control valve 42 is configured to be switched to any of the four switching positions in response to the operation of the operating device 17 for the load-carrying platform 5 within the cab 13. The holding position (neutral position N) is a position where the supply and discharge of pressure oil to the hoist cylinder 41 are blocked, and the posture of the load-carrying platform 5 is maintained. The raising position R is a position where the hoist cylinder 41 is extended by the supply and discharge of pressure oil to the hoist cylinder 41, causing the load-carrying platform 5 to rotate upward. The lowering position L is a position where the hoist cylinder 41 is contracted by the supply and discharge of pressure oil to the hoist cylinder 41, causing the load-carrying platform 5 to rotate downward. The floating position F is a position that allows the hoist cylinder 41 to contract under the weight of the load-carrying platform 5, permitting the load-carrying platform 5 to fall under its own weight. Under normal conditions, both pressure receiving sections 42a, 42b of the hoist control valve 42 are connected to the hydraulic fluid tank 23 and are held in the neutral position N by a centering spring.

When the hoist control valve 42 is in the neutral position N, communication between the supply oil passage 43 and the return oil passage 45 and the actuator lines 44a, 44b is blocked. As a result, the supply of pressure oil to the hoist cylinder 41 and the discharge of pressure oil from the hoist cylinder 41 become impossible, and the extension and contraction of the hoist cylinder 41 stop. In this case, the upstream side and the downstream side of the hoist control valve 42 on the center bypass line 31 communicate with each other.

When the hoist control valve 42 is in the raising position R, the supply oil passage 43 communicates with the actuator line 44a, and the actuator line 44b communicates with the return oil passage 45. Communication between the upstream side and the downstream side of the hoist control valve 42 on the center bypass line 31 is blocked. As a result, pressure oil from the hydraulic sources 21, 22 is supplied to the bottom chamber 41a of the hoist cylinder 41, and return oil is discharged from the rod chamber 41b to the hydraulic fluid tank 23, causing the hoist cylinder 41 to extend.

When the hoist control valve 42 is in the lowering position L, the supply oil passage 43 communicates with the actuator line 44b, and the actuator line 44a communicates with the return oil passage 45. Note that communication between the upstream side and the downstream side of the hoist control valve 42 on the center bypass line 31 is blocked. As a result, pressure oil from the hydraulic sources 21, 22 is supplied to the rod chamber 41b of the hoist cylinder 41, and return oil is discharged from the bottom chamber 41a to the hydraulic fluid tank 23, causing the hoist cylinder 41 to contract.

When the hoist control valve 42 is in the floating position F, the supply oil passage 43 communicates with the downstream side of the center bypass line 31 of the hoist control valve 42. Additionally, the actuator line 44a communicates with the return oil passage 45. As a result, return oil can be discharged from the bottom chamber 41a of the hoist cylinder 41 to the hydraulic fluid tank 23. Then, hydraulic fluid is replenished to the rod chamber 41b of the hoist cylinder 41 from the hydraulic fluid tank 23 via a check valve (not shown). Therefore, the hoist cylinder 41 can contract under the weight of the load-carrying platform 5.

The steering circuit 50 includes a pair of left and right steering cylinders 51, 52 and a steering valve 53, and is connected to the composite control valve 30 via a connecting conduit 32. The steering valve 53 is connected to the connecting conduit 32 (composite control valve 30) via a high-pressure line 54 and is also connected to the hydraulic fluid tank 23 via a low-pressure line 57. The steering valve 53 is connected to the steering cylinders 51, 52 via steering lines 55, 56.

The left and right steering cylinders 51, 52 are hydraulic actuators that extend and retract by pressure oil supplied from the second hydraulic pump 22, which is a hydraulic source, and steer the left and right front wheels 2. The left and right steering cylinders 51, 52 each have a bottom-side oil chamber (hereinafter referred to as the bottom chamber) 51a, 52a and a rod-side oil chamber (hereinafter referred to as the rod chamber) 51b, 52b. The bottom chamber 51a of the left steering cylinder 51 and the rod chamber 52b of the right steering cylinder 52 are connected via a steering line 55. The rod chamber 51b of the left steering cylinder 51 and the bottom chamber 52a of the right steering cylinder 52 are connected via a steering line 56.

The steering valve 53 controls the flow of pressure oil supplied from the second hydraulic pump 22 to the steering cylinders 51, 52, and the flow of return oil discharged from the steering cylinders 51, 52 to the hydraulic fluid tank 23. The steering valve 53 has a direction control section 53a that controls the flow direction of pressure oil supplied from the second hydraulic pump 22 to the left and right steering cylinders 51, 52, and the flow direction of return oil discharged from the left and right steering cylinders 51, 52 to the hydraulic fluid tank 23. Additionally, the steering valve 53 has a flow rate adjustment section 53b that adjusts the flow rate of pressure oil supplied from the second hydraulic pump 22 to the left and right steering cylinders 51, 52. The direction control section 53a is configured to switch from the neutral position N to the left and right steering positions L, R in response to the rotational operation of the steering wheel 16. The flow rate adjustment section 53b adjusts the flow rate of pressure oil flowing through it (pressure oil supplied to the left and right steering cylinders 51, 52) in response to the rotational operation of the steering wheel 16.

In the steering valve 53 shown in Fig. 2, for example, when the steering wheel 16 is rotated counterclockwise, the direction control section 53a is switched to the left steering position L. In this case, the pressure oil from the second hydraulic pump 22 passes from the left to the right through the flow adjustment section 53b via the direction control section 53a at the left steering position L. At this time, the flow adjustment section 53b adjusts the flow rate of the pressure oil, which then returns to the direction control section 53a. The pressure oil that returns to the direction control section 53a is supplied via the steering line 56 to the rod chamber 51b of the left steering cylinder 51 and the bottom chamber 52a of the right steering cylinder 52. Meanwhile, the pressure oil in the bottom chamber 51a of the left steering cylinder 51 and the rod chamber 52b of the right steering cylinder 52 is discharged to the hydraulic fluid tank 23 via the steering line 55 and the direction control section 53a of the steering valve 53. As a result, the left steering cylinder 51 contracts while the right steering cylinder 52 extends, performing a left steering operation in response to the rotation of the steering wheel 16.

Also, when the steering wheel 16 is rotated clockwise, the direction control section 53a is switched to the right steering position R. In this case, the pressure oil from the second hydraulic pump 22 passes from the right to the left through the flow adjustment section 53b via the direction control section 53a at the right steering position R. At this time, the flow adjustment section 53b adjusts the flow rate of the pressure oil, which then returns to the direction control section 53a. The pressure oil that returns to the direction control section 53a is supplied via the steering line 55 to the bottom chamber 51a of the left steering cylinder 51 and the rod chamber 52b of the right steering cylinder 52. Meanwhile, the pressure oil in the rod chamber 51b of the left steering cylinder 51 and the bottom chamber 52a of the right steering cylinder 52 is discharged to the hydraulic fluid tank 23 via the steering line 56 and the direction control section 53a of the steering valve 53. This causes the left steering cylinder 51 to extend while the right steering cylinder 52 contracts, performing a right steering operation in response to the rotation of the steering wheel 16.

The accumulator 58 is connected to the high-pressure line 54. The accumulator 58 stores the pressure of the pressure oil supplied from the second hydraulic pump 22. The high-pressure line 54 is connected to the hydraulic fluid tank 23 via the relief valve 59. The relief valve 59 defines the maximum pressure of the high-pressure line 54. Therefore, the high-pressure line 54 is maintained at a predetermined pressure by the accumulator 58 and the relief valve 59. This ensures the driving of the steering cylinders 51, 52 in response to the operation of the steering wheel 16. If the pressure oil from the second hydraulic pump 22 is not supplied to the steering cylinders 51, 52, the accumulator 58 supplies the stored pressure to the steering cylinders 51, 52 via the steering valve 53.

A pressure sensor 61 is attached to the high-pressure line 54 to detect the pressure of the high-pressure line 54. The pressure sensor 61 detects the pressure value of the high-pressure line 54 and outputs the detection signal to the control device 80.

A check valve 33 is arranged between the steering circuit 50 and the second hydraulic pump 22. The check valve 33 allows the flow of pressure oil from the second hydraulic pump 22 to the steering circuit 50 while preventing reverse flow. The check valve 33 is arranged, for example, upstream of the composite control valve 30.

The composite control valve 30 functions as a circuit switching valve that switches the supply destination circuits 40, 50 of the pressure oil discharged from the hydraulic sources 21, 22. Additionally, the control valve 30 also functions as a bleed-down control valve that releases (bleeds down) the pressure oil stored in the accumulator 58 of the steering circuit 50 to the hydraulic fluid tank 23. Thus, the control valve 30 is a single control valve with the two functions of the circuit switching valve and the bleed-down control valve, and is configured, for example, by a 6-port 3-position hydraulic pilot-operated control valve. Furthermore, the control valve 30 has pressure receiving sections 30a, 30b into which pilot pressure is input on both the left and right sides.

The composite control valve 30 has, for example, a first pump port p1 connected to the first hydraulic pump 21 via the first discharge line 25 and the center bypass line 31, and a second pump port p2 connected to the second hydraulic pump 22 via the second discharge line 26. Additionally, the control valve 30 has a tank port t connected to the hydraulic fluid tank 23 via the return oil passage 34, and a hoist port h connected to the hoist circuit 40 via the center bypass line 31. Then, the control valve 30 is connected to the steering circuit 50 via the connection line 32, and has a first steering port s1 communicating with the steering circuit 50 and the second hydraulic pump 22, and a second steering port s2 communicating with the steering circuit 50 and the hydraulic fluid tank 23, via the connection line 32, totaling six ports. The control valve 30 has three switching positions: a first position N as a non-confluence position, a second position D as a bleed-down position, and a third position C as a confluence position. The control valve 30 is configured to be switchable to any of the three switching positions. Under normal conditions, both pressure receiving sections 30a, 30b of the control valve 30 are connected to the hydraulic fluid tank 23 and are held in the neutral position N by a centering spring.

The neutral position N of the composite control valve 30 is a non-confluence position that guides the pressure oil discharged from the first hydraulic pump 21 to the hoist circuit 40 and the pressure oil discharged from the second hydraulic pump 22 to the steering circuit 50. That is, the neutral position N is a position where the pressure oil discharged from the first hydraulic pump 21 and the pressure oil discharged from the second hydraulic pump 22 do not merge, and pressure oil is supplied to the hoist circuit 40 and the steering circuit 50, respectively. In detail, the neutral position N (non-confluence position) is a position that communicates only the second hydraulic pump 22 of the hydraulic sources 21, 22 with the steering circuit 50, while blocking communication between the steering circuit 50 and the hydraulic fluid tank 23, and communicating only the first hydraulic pump 21 of the hydraulic sources 21, 22 with the hoist circuit 40.

The second position D of the composite control valve 30 is a bleed-down position that releases (bleeds down) the pressure oil stored in the accumulator 58 to the hydraulic fluid tank 23 when the operation of the dump truck 1 is completely terminated. The bleed-down position D is a position that guides the pressure oil of the accumulator 58 (steering circuit 50) to the hydraulic fluid tank 23, and is a position where pressure oil supply from the first hydraulic pump 21 to the hoist circuit 40 is possible, and pressure oil supply from the second hydraulic pump 22 to the steering circuit 50 is possible. In detail, the bleed-down position D is a position that communicates only the second hydraulic pump 22 of the hydraulic sources 21, 22 with the steering circuit 50, while communicating the steering circuit 50 with the hydraulic fluid tank 23, and communicating only the first hydraulic pump 21 of the hydraulic sources 21, 22 with the hoist circuit 40.

In the second position D (bleed-down position), the composite control valve 30 has a throttle 30c in the oil passage that communicates the steering circuit 50 with the hydraulic fluid tank 23. The throttle 30c functions as a fluid resistance for the pressure oil from the second hydraulic pump 22 flowing out to the hydraulic fluid tank 23 via the composite control valve 30.

The third position C of the composite control valve 30 is a position that guides the pressure oil discharged from the first hydraulic pump 21 to the hoist circuit 40 and the pressure oil discharged from the second hydraulic pump 22 to the hoist circuit 40. That is, the third position C is a confluence position that merges the pressure oil discharged from the second hydraulic pump 22 with the pressure oil discharged from the first hydraulic pump 21 and guides it to the hoist circuit 40. In detail, the confluence position C is a position that blocks communication between the steering circuit 50 and both the first hydraulic pump 21 and the second hydraulic pump 22, while blocking communication between the steering circuit 50 and the hydraulic fluid tank 23, and communicating both the first hydraulic pump 21 and the second hydraulic pump 22 with the hoist circuit 40.

The hydraulic system 20 includes a pilot circuit 70 that generates pilot pressure from a pilot hydraulic source to drive the hoist control valve 42 and inputs it to the pressure receiving sections 42a, 42b of the hoist control valve 42. Additionally, the hydraulic system 20 includes a pilot circuit 70 that generates pilot pressure from a pilot hydraulic source to drive the composite control valve 30 and inputs it to the pressure receiving sections 30a, 30b of the composite control valve 30. The pilot circuit 70 generates pilot pressure for the hoist control valve 42 in response to the operation of the operating device 17 for the load-carrying platform 5.

The pilot circuit 70 includes a pilot pump 71 driven by the prime mover 15 and four solenoid valves 72, 73, 74, 75 connected to the pilot pump 71 via the pilot line 76. The section between the pilot pump 71 and the solenoid valves 72, 73, 74, 75 in the pilot line 76 is connected to the hydraulic fluid tank 23 via an accumulator 78 and a pilot relief valve 77. The pilot pump 71 is a pilot hydraulic source, for example, a fixed displacement pump. The pilot relief valve 77 defines the maximum pressure of the pilot line 76 (the maximum discharge pressure of the pilot pump 71). The accumulator 78 stores the pressure of the pressure oil discharged from the pilot pump 71. Therefore, the pilot line 76 is maintained at a predetermined pressure by the pilot relief valve 77 and the accumulator 78. This ensures the source pressure for generating the pilot pressure to drive the hoist control valve 42 and the composite control valve 30.

Solenoid valves 72 and 73 generate pilot pressure for the hoist control valve 42 in response to the operation of the operating device 17 for the load-carrying platform 5, switching the hoist control valve 42 to one of four switching positions (neutral position N, raise position R, lower position L, float position F). Solenoid valves 74 and 75 generate pilot pressure for the composite control valve 30, switching the composite control valve 30 to one of three switching positions (non-confluence position N, bleed-down position D, confluence position C). Each of the solenoid valves 72, 73, 74, and 75 is a reducing valve that reduces the pressure (primary pressure) of the pilot line 76 in response to a control signal (excitation current) from the control device 80 and outputs the reduced pressure (secondary pressure) as pilot pressure.

Solenoid valve 72 is used for switching the hoist control valve 42 to the raise position R. When a standby control signal (off signal) is input, one pressure receiving section 42a of the hoist control valve 42 communicates with the hydraulic fluid tank 23. When a drive control signal is input, the solenoid valve 72 outputs pilot pressure to one pressure receiving section 42a of the hoist control valve 42. Solenoid valve 73 is used for switching the hoist control valve 42 to the float position F and the lower position L. When a standby control signal (off signal) is input, the other pressure receiving section 42b of the hoist control valve 42 communicates with the hydraulic fluid tank 23. When a drive control signal is input, the solenoid valve 73 outputs pilot pressure corresponding to the float position F or the lower position L to the other pressure receiving section 42b of the hoist control valve 42. If both solenoid valves 72 and 73 block the input of pilot pressure to the hoist control valve 42, the hoist control valve 42 assumes the neutral position N.

Solenoid valve 74 is used for switching the composite control valve 30 to the bleed-down position D. When a standby control signal (off signal) is input, the other pressure receiving section 30b of the composite control valve 30 communicates with the hydraulic fluid tank 23. When a drive control signal (on signal) is input, the solenoid valve 74 outputs pilot pressure to the other pressure receiving section 30b of the composite control valve 30. Solenoid valve 75 is used for switching the composite control valve 30 to the confluence position C. When a standby control signal (off signal) is input, one pressure receiving section 30a of the composite control valve 30 communicates with the hydraulic fluid tank 23. When a drive control signal is input, the solenoid valve 75 outputs pilot pressure to one pressure receiving section 30a of the composite control valve 30. If both solenoid valves 74 and 75 block the input of pilot pressure to the composite control valve 30, the composite control valve 30 assumes the non-confluence position, which is the neutral position N.

The hydraulic system 20 drives the hoist control valve 42 in response to the operation of the operating device 17 for the load-carrying platform 5. The operating device 17 is configured, for example, by an electric lever device and has an operating lever 17a that the operator manually tilts. The operating device 17 can be operated to one of four operating positions corresponding to each switching position (hold position N, raise position R, float position F, lower position L) of the hoist control valve 42. The operating lever 17a is usually positioned in the hold position. The operating device 17 outputs an operation signal corresponding to the operating position to the control device 80.

The control device 80 is electrically connected to the operating device 17, and the operation signal of the operating device 17 is input to the control device 80. The control device 80 indirectly controls the switching position of the hydraulic pilot type hoist control valve 42 by controlling the solenoid valves 72 and 73 of the pilot hydraulic circuit 70 according to the operating position (operation signal) of the operating device 17. Also, by controlling the solenoid valves 74 and 75 of the pilot hydraulic circuit 70, the switching position of the hydraulic pilot type composite control valve 30 is indirectly controlled. Additionally, the control device 80 controls the pump volumes of the first hydraulic pump 21 and the second hydraulic pump 22 via the regulator 21a of the first hydraulic pump 21 and the regulator 22a of the second hydraulic pump 22.

The control device 80 includes, for example, a storage device 81 composed of RAM, ROM, etc., and a processing device 82 composed of a CPU, MPU, etc. The storage device 81 stores in advance programs and various information for controlling the switching positions of the hoist control valve 42 and the composite control valve 30. The processing device 82 reads programs and various information from the storage device 81 as appropriate and executes processing according to the program to realize various functions. The control device 80 may be composed of a single computer or multiple computers.

When the operating lever 17a of the operating device 17 is operated to the raise operation position, the control device 80 outputs a control signal (excitation current) to the solenoid valve 72 and outputs an off signal to the solenoid valve 73. As a result, the pilot pressure from the solenoid valve 72 is input to one pressure receiving section 42a of the hoist control valve 42, and the hoist control valve 42 switches to the raise position R.

In this case, the control device 80, for example, switches the composite control valve 30 to the confluence position C. Specifically, a control signal (excitation current) is output to the solenoid valve 75, and an off signal is output to the solenoid valve 74. As a result, the pilot pressure from the solenoid valve 75 is input to one pressure receiving section 30a of the composite control valve 30, and the composite control valve 30 switches from the neutral position N to the confluence position C.

Therefore, the pressure oil from the first hydraulic pump 21 and the second hydraulic pump 22 merges through the composite control valve 30 in the confluence position C and is guided to the hoist control valve 42. Since the hoist control valve 42 is switched to the raise position R, the pressure oil from the first hydraulic pump 21 and the second hydraulic pump 22 is supplied to the bottom chamber 41a of the hoist cylinder 41 through the hoist control valve 42 in the raise position R. As a result, it becomes possible to change the load-carrying platform 5 loaded with the transport object from the transport posture to the discharge posture.

When the operating lever 17a of the operating device 17 is operated to the lower operating position, the control device 80 outputs a control signal (excitation current) corresponding to the lower operation to the solenoid valve 73 and outputs an off signal to the solenoid valve 72. As a result, the pilot pressure from the solenoid valve 73 is input to the other pressure receiving section 42b of the hoist control valve 42, and the hoist control valve 42 switches to the lower position L. In this case, the composite control valve 30 is maintained in the neutral position N. When the operating device 17 is in the lower operation, the contraction of the hoist cylinder 41 is enabled only by the pressure oil supplied from the first hydraulic pump 21.

When the operating lever 17a of the operating device 17 is operated to the float operation position, the control device 80 outputs a control signal (excitation current) corresponding to the float operation to the solenoid valve 73 and outputs an off signal to the solenoid valve 72. As a result, the pilot pressure from the solenoid valve 73 is input to the other pressure receiving section 42b of the hoist control valve 42, and the hoist control valve 42 switches to the float position F. In this case, the composite control valve 30 is maintained in the neutral position N. When the operating device 17 is in the float operation, the contraction of the hoist cylinder 41 is enabled by the weight of the load-carrying platform 5.

Also, when the operation of the dump truck 1 is completely terminated, the control device 80 performs a bleed-down to discharge the pressure oil stored in the accumulator 58 of the steering circuit 50 to the hydraulic fluid tank 23. For example, after a certain period of time has elapsed since the prime mover 15 has stopped, the composite control valve 30 is switched to the bleed-down position D. As a result, the pressure stored in the accumulator 58 of the steering circuit 50 is gradually discharged from the return line 34 to the hydraulic fluid tank 23 through the throttle 30c of the composite control valve 30 in the bleed-down position D. At this time, the flow from the steering circuit 50 to the second hydraulic pump 22 through the composite control valve 30 in the bleed-down position D is blocked by the check valve 33. The control device 80 can determine the completion of the bleed-down based on the detection value of the pressure sensor 61 that detects the pressure of the accumulator 58.

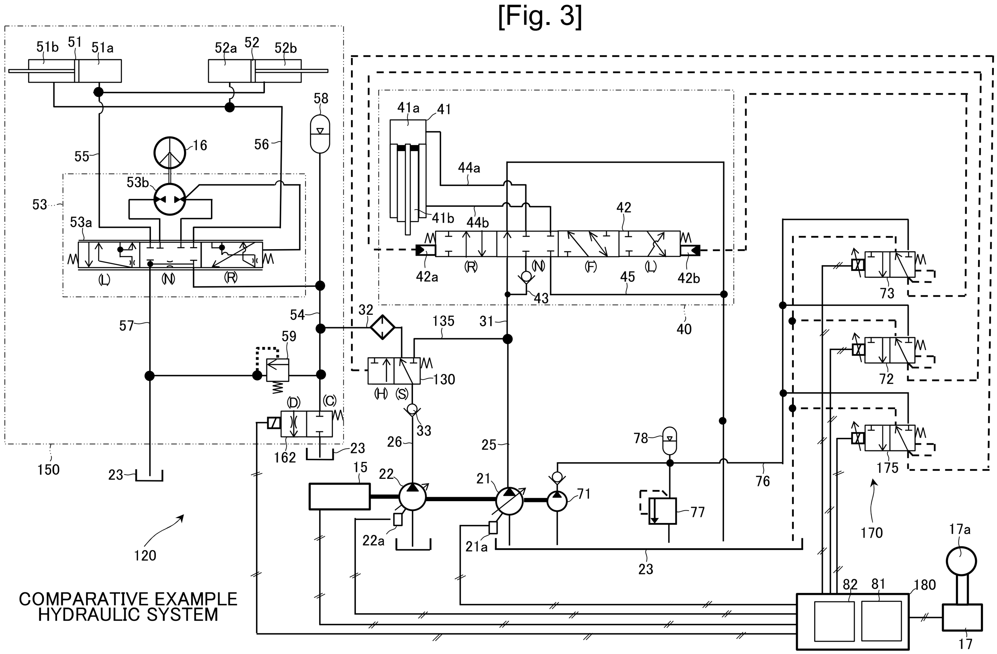

Next, the effects of the hauling vehicle according to the first embodiment will be described with reference to FIGS. 2 and 3, while comparing with the hydraulic system of a comparative example of a hauling vehicle. FIG. 3 is a hydraulic circuit diagram showing the hydraulic system configuration of a comparative example for the hydraulic system of the hauling vehicle according to the first embodiment. In FIG. 3, parts with the same reference numerals as those shown in FIG. 2 are similar parts, and detailed descriptions thereof are omitted.

In the hydraulic system 120 of the comparative example, the steering circuit 150 is provided with a bleed-down control valve 162 that has only the function of discharging the pressure oil of the accumulator 58 to the hydraulic fluid tank 23. The bleed-down control valve 162 is provided on a line connecting the high-pressure line 54 and the hydraulic fluid tank 23. The bleed-down control valve 162 is configured as a two-port, two-position electromagnetic control valve and is selectively switched between the closed position C and the open position D in response to a control signal (excitation current) from the control device 180. When the bleed-down control valve 162 is in the closed position C, pressure oil is retained in the accumulator 58. On the other hand, when the bleed-down control valve 162 is switched to the open position D, the pressure oil in the accumulator 58 is discharged to the hydraulic fluid tank 23 through the high-pressure line 54 and the bleed-down control valve 162.

In addition, the hydraulic system 120 of the comparative example has a switching valve 130 that switches the supply destination of the pressure oil from the second hydraulic pump 22 between the hoist circuit 40 and the steering circuit 150, instead of the composite control valve 30 of the hydraulic system 20 of the present embodiment. The switching valve 130 is connected to the second hydraulic pump 22 via the second discharge line 26. The output side of the switching valve 130 is connected to the steering circuit 150 via the connection line 32 and is also connected to the hoist circuit 40 via the connection line 135 branching from the center bypass line 31. It should be noted that the first hydraulic pump 21 of the hydraulic system 120 is connected to the hoist circuit 40 via the first discharge line 25 without passing through a valve mechanism.

The switching valve 130 is a hydraulic pilot valve with two switching positions. The first position S of the switching valve 130 is a position where the supply destination of the pressure oil from the second hydraulic pump 22 is the steering circuit 150, allowing communication between the steering circuit 150 and the second hydraulic pump 22. The second position H of the switching valve 130 is a position where the supply destination of the pressure oil from the second hydraulic pump 22 is the hoist circuit 40, allowing communication between the hoist circuit 40 and the second hydraulic pump 22. The switching valve 130 is configured to be switched by the pilot pressure generated by the solenoid valve 175 of the pilot circuit 170, and switches between the first position S and the second position H in response to control signals from the control device 180.

In the hydraulic system 120 of the comparative example, although the probability is extremely low, it is possible for the switching valve 130 to malfunction or become stuck in the second position H (where the supply destination of the pressure oil is the hoist circuit 40), and for the bleed-down control valve 162 to malfunction or become stuck in the open position D. In this case, the pressure oil from the second hydraulic pump 22 is supplied to the hoist circuit 40 and not to the steering circuit 150. Furthermore, the pressure oil stored in the accumulator 58 of the steering circuit 150 is released to the hydraulic fluid tank 23 through the bleed-down control valve 162 in the open position D. Therefore, if both the switching valve 130 and the bleed-down control valve 162 are simultaneously in unintended positions, compared to when only one of them 130, 162 malfunctions, the rapid pressure drop in the steering circuit 150 results in a loss of steering capability.

In contrast, in the hydraulic system 20 of the present embodiment, as shown in Figure 2, the composite control valve 30 has a bleed-down function to release the pressure oil from the accumulator 58 of the steering circuit 50 to the hydraulic fluid tank 23, as well as a switching function for supplying pressure oil from the hydraulic source 22 to the steering circuit 50. That is, a single composite control valve 30 has the two functions of the switching valve 130 and the bleed-down control valve 162 of the hydraulic system 120. By supplying pressure oil from the hydraulic source 22 to the steering circuit 50 at the bleed-down position D of the composite control valve 30, which allows the release of pressure oil from the accumulator 58 to the hydraulic fluid tank 23, the simultaneous occurrence of pressure oil release from the accumulator 58 to the hydraulic fluid tank 23 and pressure oil cutoff from the hydraulic source 22 to the steering circuit 50 is avoided.

In this embodiment, if the composite control valve 30 inadvertently malfunctions or becomes stuck in the bleed-down position D during the operation of the dump truck 1, the steering circuit 50 will be in communication with the hydraulic fluid tank 23. At this time, the first hydraulic pump 21 and the second hydraulic pump 22 are operating. The pressure oil from the second hydraulic pump 22 flows to the steering circuit 50 side through the composite control valve 30 at the bleed-down position D (arrow on the central side of position D), and is then supplied to the steering circuit 50 via the connecting line 32. The pressure oil from the second hydraulic pump 22 then flows out to the hydraulic fluid tank 23 through the throttle 30c of the composite control valve 30 at the bleed-down position D (arrow on the right side of position D). The flow from the second hydraulic pump 22 to the hydraulic fluid tank 23 through the composite control valve 30 at the bleed-down position D is restricted by the fluid resistance of the throttle 30c. Therefore, the flow rate of the pressure oil supplied from the second hydraulic pump 22 to the steering circuit 50 exceeds the flow rate flowing out to the hydraulic fluid tank 23 through the throttle 30c at the bleed-down position D. Thus, the pressure in the steering circuit 50 (accumulator 58) is maintained, allowing the steering function of the steering circuit 50 to be preserved. It should be noted that the pressure oil from the first hydraulic pump 21 is supplied to the hoist circuit 40. In this case, the operation of the hoist cylinder 41 becomes possible.

As described above, the dump truck 1 (hauling vehicle) according to the first embodiment includes a hydraulic fluid tank 23 for storing hydraulic fluid, and a first hydraulic pump 21 and a second hydraulic pump 22 for supplying the hydraulic fluid in the hydraulic fluid tank 23 at high pressure as a hydraulic source. Furthermore, the dump truck 1 includes steering cylinders 51, 52 that steer the front wheels 2 (steering wheels) by extending and compressing with the pressure oil supplied from the hydraulic source 22, a steering valve 53 that controls the pressure oil supplied to the steering cylinders 51, 52 from the hydraulic source 22, and a steering circuit 50 with an accumulator 58 that stores the pressure oil supplied from the hydraulic source 22 and can supply the pressure oil to the steering cylinders 51, 52 via the steering valve 53. The steering circuit 50 is configured to be connected to the hydraulic source 22 and the hydraulic fluid tank 23 via the composite control valve 30. The composite control valve 30 has a neutral position N (first position) that allows communication between the steering circuit 50 and the hydraulic source 22 while blocking communication between the steering circuit 50 and the hydraulic fluid tank 23. Furthermore, the composite control valve 30 has a bleed-down position D (second position) that allows communication between the steering circuit 50 and the hydraulic source 22, and also allows communication between the steering circuit 50 and the hydraulic fluid tank 23 to discharge the pressure oil from the accumulator 58 to the hydraulic fluid tank 23. Additionally, the composite control valve 30 has a throttle 30c in the oil passage that allows communication between the steering circuit 50 and the hydraulic fluid tank 23 at the bleed-down position D (second position).

According to this configuration, the bleed-down position D (second position) of the composite control valve 30, which allows the release of pressure oil (bleed-down) from the accumulator 58 of the steering circuit 50 to the hydraulic fluid tank 23, establishes a communication state between the steering circuit 50 and the second hydraulic pump 22 (hydraulic source). Therefore, it becomes possible to supply pressure oil from the second hydraulic pump 22 (hydraulic source) to the steering circuit 50 side via the composite control valve 30. Furthermore, the throttle 30c at the bleed-down position D (second position) of the composite control valve 30 serves as the fluid resistance for the pressure oil flowing from the second hydraulic pump 22 (hydraulic source) to the hydraulic fluid tank 23. Thus, the simultaneous occurrence of pressure oil release from the accumulator 58 of the steering circuit 50 to the hydraulic fluid tank 23 and pressure oil supply cutoff from the hydraulic source 22 to the steering circuit 50 is avoided.

Additionally, the dump truck 1 (hauling vehicle) according to this embodiment includes a hoist circuit 40 with a hoist cylinder 41 that is extended and retracted by the pressure oil supplied from the hydraulic sources 21, 22 via the composite control valve 30, allowing the raising and lowering of the load-carrying platform. The composite control valve 30, in addition to the aforementioned neutral position N (first position) and bleed-down position D (second position), has a third position C that blocks communication between the steering circuit 50 and the hydraulic sources 21, 22, as well as between the steering circuit 50 and the hydraulic fluid tank 23, while allowing communication between the hoist circuit 40 and the hydraulic sources 21, 22.

According to this configuration, by switching between the first position N and the third position C of the composite control valve 30, the supply destination of the pressure oil from the hydraulic sources 21, 22 can be switched to either the hoist circuit 40 or the steering circuit 50. Then, by switching to the bleed-down position D (second position) of the composite control valve 30, the bleed-down execution of the accumulator 58 becomes possible. Furthermore, at the first position N and the third position C of the composite control valve 30, pressure oil release from the accumulator 58 of the steering circuit 50 to the hydraulic fluid tank 23 does not occur.

Additionally, in this embodiment, the hydraulic source is composed of the first hydraulic pump 21 and the second hydraulic pump 22. The neutral position N (first position) of the composite control valve 30 is a position that allows communication only between the steering circuit 50 and the second hydraulic pump 22 of the hydraulic sources 21, 22. And, the neutral position N (first position) is a position that blocks communication between the steering circuit 50 and the hydraulic fluid tank 23, while allowing communication only between the hoist circuit 40 and the first hydraulic pump 21 of the hydraulic sources 21, 22. The bleed-down position D (second position) of the composite control valve 30 is a position that allows communication between the steering circuit 50 and at least the second hydraulic pump 22 of the hydraulic sources 21, 22. And, the bleed-down position D (second position) is a position that allows communication between the steering circuit 50 and the hydraulic fluid tank 23, while blocking communication with at least the second hydraulic pump 22 of the hydraulic sources 21, 22. The confluence position C (third position) of the composite control valve 30 is a position that blocks communication between the steering circuit 50 and both the first hydraulic pump 21 and the second hydraulic pump 22. And, the confluence position C (third position) is a position that blocks communication between the steering circuit 50 and the hydraulic fluid tank 23, while allowing communication with both the hoist circuit 40 and the first hydraulic pump 21 and the second hydraulic pump 22.

In the configuration where the hydraulic source is composed of the first hydraulic pump 21 and the second hydraulic pump 22, when the composite control valve 30 is in the non-confluence position N (first position), the pressure oil from the first hydraulic pump 21 and the pressure oil from the second hydraulic pump 22 do not merge and can be supplied separately to the hoist circuit 40 and the steering circuit 50. Also, when the composite control valve 30 is in the confluence position C (third position), the pressure oil from the first hydraulic pump 21 and the pressure oil from the second hydraulic pump 22 merge and can be supplied to the hoist circuit 40.

Additionally, in this embodiment, the bleed-down position D (second position) of the composite control valve 30 is a position that allows communication only between the steering circuit 50 and the second hydraulic pump 22 of the hydraulic sources 21, 22. Then, the aforementioned bleed-down position D (second position) is a position that connects the steering circuit 50 with the hydraulic fluid tank 23, and connects only the first hydraulic pump 21 of the hydraulic sources 21, 22 with the hoist circuit 40.

According to this configuration, when the composite control valve 30 is in the bleed-down position D (second position), it becomes possible to supply pressure oil from the second hydraulic pump 22 to the steering circuit 50, thereby avoiding the simultaneous occurrence of pressure oil release from the accumulator 58 to the hydraulic fluid tank 23 and the interruption of pressure oil supply from the hydraulic source 22 to the steering circuit 50. Furthermore, since the pressure oil from the first hydraulic pump 21 is supplied to the hoist circuit 40, the operation of the hoist cylinder 41 becomes possible.

### [Modification Example of the First Embodiment]

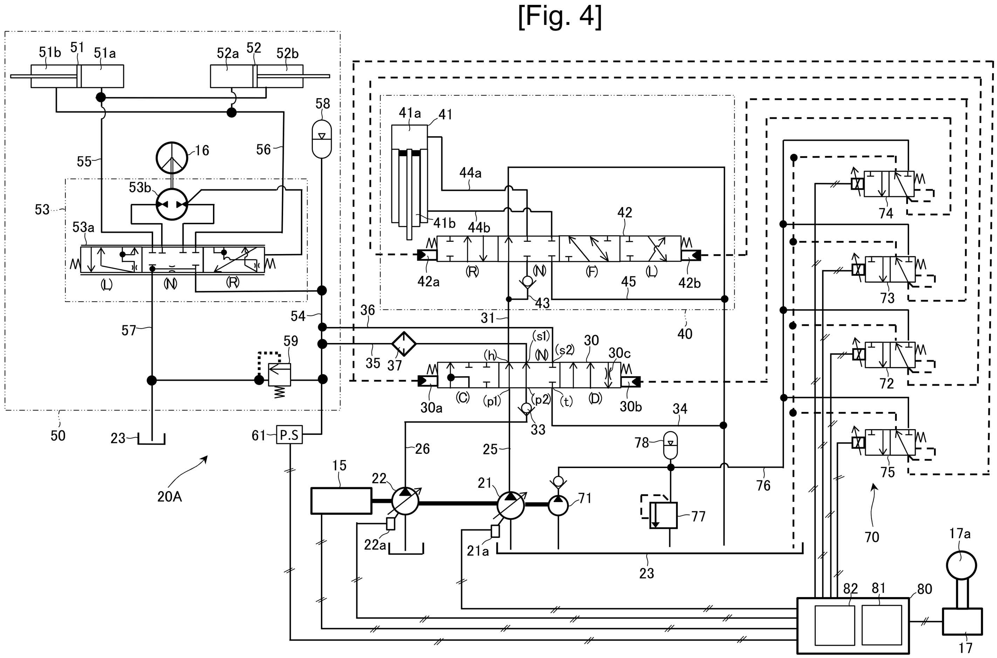

Next, the hauling vehicle according to the modification example of the first embodiment will be described with reference to FIG. 4. FIG. 4 is a hydraulic circuit diagram showing the configuration of the hydraulic system provided in the hauling vehicle according to the modification example of the first embodiment. In FIG. 4, components with the same reference numerals as those shown in FIGS. 1 to 3 are similar parts, and their detailed description is omitted.

The difference between the hauling vehicle according to the modification example of the first embodiment and the first embodiment is the configuration connecting the steering circuit 50 and the composite control valve 30 in the hydraulic system 20A. In the hydraulic system 20A of the hauling vehicle according to the modification example of the first embodiment, the other configurations are similar to the hydraulic system 20 of the hauling vehicle of the first embodiment (see FIG. 2), and their description is omitted.

In the hydraulic system 20A according to the modification example of the first embodiment, the steering circuit 50 is connected to the composite control valve 30 via parallel first connection conduit 35 and second connection conduit 36. The first connection conduit 35 is connected to the first steering port s1 side, which is a port that enables communication between the steering circuit 50 and the second hydraulic pump 22 in the composite control valve 30. The second connection conduit 36 is connected to the second steering port s2 side, which is a port that enables communication between the steering circuit 50 and the hydraulic fluid tank 23 in the composite control valve 30. Note that the first connection conduit 35 is provided with a filter 37 for removing foreign matter from the pressure oil.

According to this configuration, the filter 37 of the first connection conduit 35 can remove foreign matter from the pressure oil flowing from the second hydraulic pump 22 to the steering circuit 50. This improves the contamination resistance of the steering circuit 50.

### [Second Embodiment]

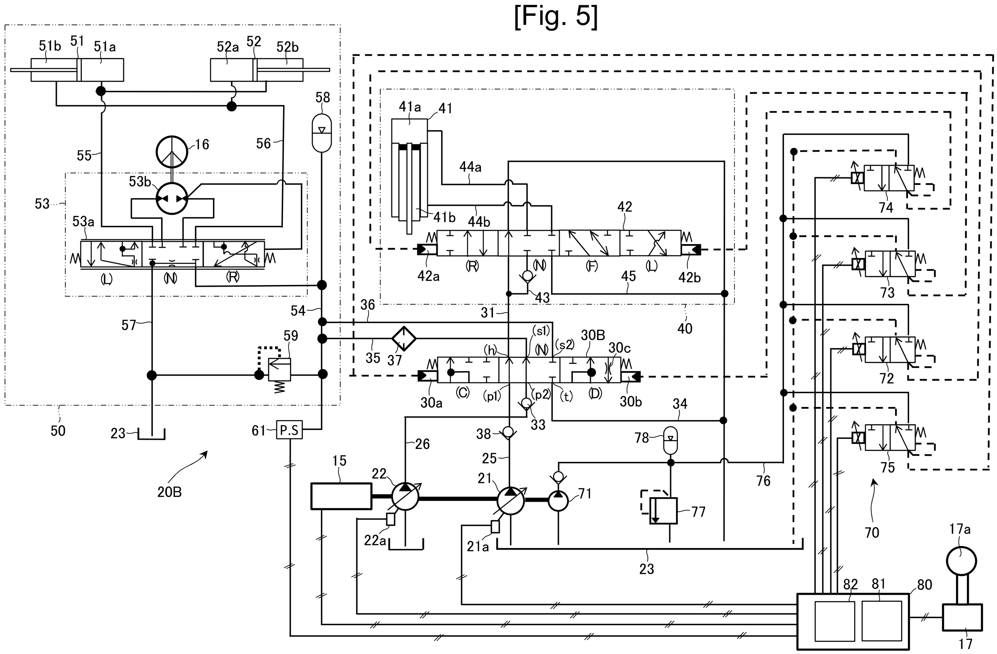

Next, the hauling vehicle according to the second embodiment of the present invention will be described with reference to FIG. 5. FIG. 5 is a hydraulic circuit diagram showing the configuration of the hydraulic system provided in the hauling vehicle according to the second embodiment. In FIG. 5, components with the same reference numerals as those shown in FIGS. 1 to 4 are similar parts, and their detailed description is omitted.

The difference between the hauling vehicle according to the second embodiment and the modification example of the first embodiment is the configuration of the composite control valve 30B in the hydraulic system 20B, and the addition of a check valve 38. The other configurations of the hydraulic system 20B of the hauling vehicle according to the second embodiment are similar to the hydraulic system 20A of the hauling vehicle according to the modification example of the first embodiment (see FIG. 4), and their description is omitted.

Specifically, among the three switching positions of the composite control valve 30B, the first position, which is the non-confluence position N, and the third position, which is the confluence position C, are the same as the non-confluence position N and the confluence position C of the composite control valve 30 of the first embodiment. On the other hand, the second position of the composite control valve 30B, which is the bleed-down position D, is a position that guides the pressure oil of the accumulator 58 (steering circuit 50) to the hydraulic fluid tank 23. And the bleed-down position D is a position where pressure oil can be supplied from the first hydraulic pump 21 and the second hydraulic pump 22 to the steering circuit 50. In detail, the bleed-down position D of the composite control valve 30B is a position that allows communication between the steering circuit 50 and both the first hydraulic pump 21 and the second hydraulic pump 22. And the bleed-down position D is a position that allows communication between the steering circuit 50 and the hydraulic fluid tank 23, and blocks communication between the hoist circuit 40 and both the first hydraulic pump 21 and the second hydraulic pump 22.

A check valve 38 is provided between the first hydraulic pump 21 and the composite control valve 30B. The check valve 38 allows the flow of pressure oil from the first hydraulic pump 21 to the composite control valve 30B, while preventing reverse flow. The check valve 38 prevents the flow from the steering circuit 50 to the first hydraulic pump 21 when the composite control valve 30B is in the bleed-down position D.

In this embodiment, when the composite control valve 30B malfunctions or is stuck in the bleed-down position D, the pressure oil from the first hydraulic pump 21 merges with the pressure oil from the second hydraulic pump 22 before flowing to the steering circuit 50 side. Therefore, compared to the case of the composite control valve 30 (modification example of the first embodiment) where only the pressure oil from the second hydraulic pump 22 flows to the steering circuit 50 side, the flow rate of the pressure oil flowing to the steering circuit 50 side increases. Therefore, the flow rate of the pressure oil supplied to the steering circuit 50 side via the composite control valve 30B in the bleed-down position D can reliably exceed the flow rate of the pressure oil flowing out to the hydraulic fluid tank 23 via the throttle 30c in the bleed-down position D. Thus, the pressure within the steering circuit 50 is maintained, and the steering function of the steering circuit 50 can be maintained. However, since the supply of pressure oil from the first hydraulic pump 21 and the second hydraulic pump 22 to the hoist circuit 40 is blocked, the operation of the hoist cylinder 41 becomes impossible.

According to the hauling vehicle of the second embodiment described above, similar to the first embodiment (modification example) described above, the bleed-down position D (second position) of the composite control valve 30B, which allows pressure oil discharge (bleed-down) from the accumulator 58 of the steering circuit 50 to the hydraulic fluid tank 23, enables communication between the steering circuit 50 and the second hydraulic pump 22 (hydraulic source), allowing pressure oil supply from the second hydraulic pump 22 (hydraulic source) to the steering circuit 50 side via the composite control valve 30B. Furthermore, the throttle 30c in the bleed-down position D (second position) of the composite control valve 30B acts as a fluid resistance to the flow of pressure oil from the second hydraulic pump 22 (hydraulic source) to the hydraulic fluid tank 23. Therefore, the simultaneous occurrence of pressure oil discharge from the accumulator 58 of the steering circuit 50 to the hydraulic fluid tank 23 and the blocking of pressure oil supply from the hydraulic source 22 to the steering circuit 50 is avoided.

Also, the bleed-down position D (second position) of the composite control valve 30B according to this embodiment is a position that allows communication between the steering circuit 50 and both the first hydraulic pump 21 and the second hydraulic pump 22. And the bleed-down position D (second position) is a position that allows communication between the steering circuit 50 and the hydraulic fluid tank 23, and blocks communication between the hoist circuit 40 and both the first hydraulic pump 21 and the second hydraulic pump 22.

According to this configuration, when the composite control valve 30B is in the bleed-down position D (second position), pressure oil can be supplied from the first hydraulic pump 21 and the second hydraulic pump 22 to the steering circuit 50 side, and compared to the composite control valve 30 of the first embodiment, the flow rate of the pressure oil flowing to the steering circuit 50 side can be increased.

### [Third Embodiment]

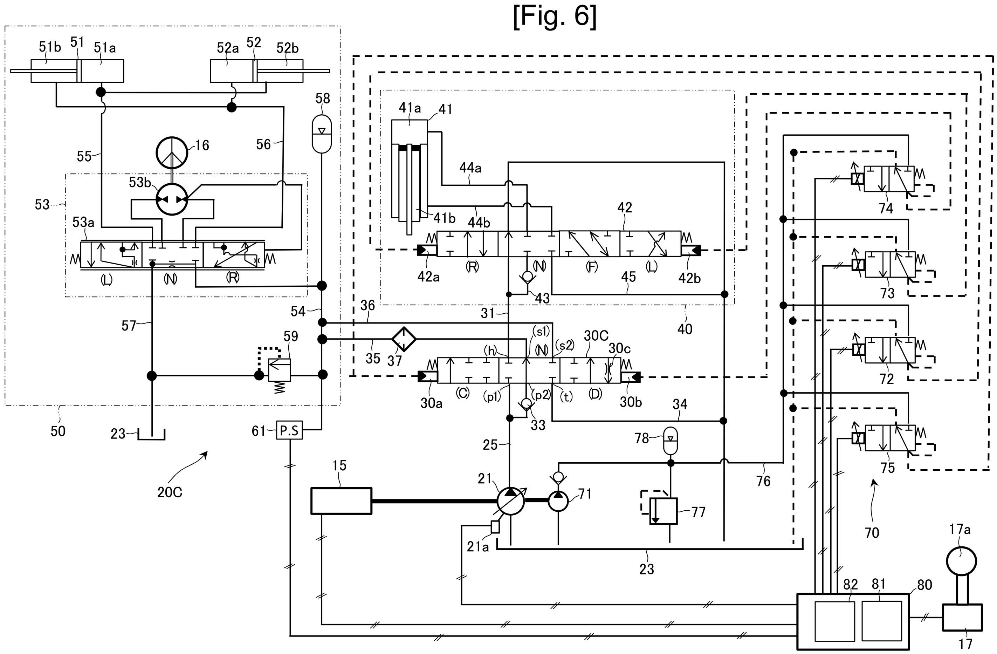

Next, the hauling vehicle according to the third embodiment of the present invention will be described with reference to FIG. 6. FIG. 6 is a hydraulic circuit diagram showing the configuration of the hydraulic system provided in the hauling vehicle according to the third embodiment. In FIG. 6, components with the same reference numerals as those shown in FIGS. 1 to 5 are similar parts, and their detailed description is omitted.

The difference between the hauling vehicle according to the third embodiment and the modification example of the first embodiment is that the hydraulic source of the hydraulic system 20C is only one first hydraulic pump 21, and accordingly, the configuration of the composite control valve 30C has been changed. The other configurations of the hydraulic system 20C of the hauling vehicle according to the third embodiment are similar to the hydraulic system 20A of the hauling vehicle according to the modification example of the first embodiment (see FIG. 4), and their description is omitted.

The hydraulic system 20C according to the third embodiment is configured with only the first hydraulic pump 21 as the hydraulic source, and the second hydraulic pump 22, which is one of the hydraulic sources of the hydraulic system 20A according to the modification example of the first embodiment, has been removed. The first pump port p1 and the second pump port p2 of the composite control valve 30C are connected to the center bypass line 31 and the oil passage branched from the center bypass line 31. The check valve 33 is located on the second pump port p2 side.

The neutral position N, which is the first position of the composite control valve 30C, is a position that guides the pressure oil discharged from the first hydraulic pump 21 to the steering circuit 50. In detail, the neutral position N allows communication between the steering circuit 50 and the first hydraulic pump 21. And the neutral position N is a position that blocks communication between the steering circuit 50 and the hydraulic fluid tank 23, and also blocks communication between the hoist circuit 40 and the first hydraulic pump 21.

The bleed-down position D, which is the second position of the composite control valve 30C, is a position that guides the pressure oil of the accumulator 58 (steering circuit 50) to the hydraulic fluid tank 23. And the bleed-down position D is a position where pressure oil can be supplied from the first hydraulic pump 21 to the steering circuit 50. In detail, the bleed-down position D allows communication between the steering circuit 50 and the first hydraulic pump 21. And the bleed-down position D is a position that allows communication between the steering circuit 50 and the hydraulic fluid tank 23, and blocks communication between the hoist circuit 40 and the first hydraulic pump 21.

The third position C of the composite control valve 30C is a position that guides the pressure oil discharged from the first hydraulic pump 21 to the hoist circuit 40. In detail, the third position C blocks communication between the steering circuit 50 and the first hydraulic pump 21. Then, the aforementioned third position C is the position that blocks the communication between the steering circuit 50 and the hydraulic fluid tank 23, and allows communication between the hoist circuit 40 and the first hydraulic pump 21.

In this embodiment, by switching the composite control valve 30C to the first position N, the pressure oil from the first hydraulic pump 21 can be supplied to the steering circuit 50. On the other hand, by switching the composite control valve 30C to the third position C, the pressure oil from the first hydraulic pump 21 can be supplied to the hoist circuit 40. That is, by switching between the first position N and the third position C of the composite control valve 30C, the supply destination of the pressure oil from the first hydraulic pump 21 can be switched.

In this embodiment, if the composite control valve 30C malfunctions or becomes stuck in the bleed-down position D, the pressure oil from the first hydraulic pump 21 flows to the steering circuit 50 side. Therefore, the flow rate of the pressure oil supplied to the steering circuit 50 side via the bleed-down position D of the composite control valve 30C exceeds the flow rate of the pressure oil flowing out to the hydraulic fluid tank 23 via the throttle 30c of the bleed-down position D. Thus, the pressure within the steering circuit 50 is maintained, and the steering function of the steering circuit 50 can be preserved. However, since the supply of pressure oil from the first hydraulic pump 21 to the hoist circuit 40 side is cut off, the operation of the hoist cylinder 41 becomes impossible.

According to the hauling vehicle of the third embodiment described above, similar to the first embodiment described earlier, the bleed-down position D (second position) of the composite control valve 30C, which allows pressure oil discharge (bleed-down) from the accumulator 58 of the steering circuit 50 to the hydraulic fluid tank 23, enables communication between the steering circuit 50 and the first hydraulic pump 21, allowing pressure oil supply from the first hydraulic pump 21 to the steering circuit 50 side via the composite control valve 30C. Furthermore, the throttle 30c of the bleed-down position D (second position) acts as a fluid resistance to the flow of pressure oil from the first hydraulic pump 21 to the hydraulic fluid tank 23. Therefore, the simultaneous occurrence of pressure oil discharge from the accumulator 58 of the steering circuit 50 to the hydraulic fluid tank 23 and the cutoff of pressure oil supply from the hydraulic source 21 to the steering circuit 50 is avoided.

Also, in this embodiment, the hydraulic source is composed only of the first hydraulic pump 21. Furthermore, the neutral position N, which is the first position of the composite control valve 30C, is a position that allows communication between the steering circuit 50 and the first hydraulic pump 21. And, the neutral position N is a position that blocks communication between the steering circuit 50 and the hydraulic fluid tank 23, and also blocks communication between the hoist circuit 40 and the first hydraulic pump 21. The bleed-down position D, which is the second position, is a position that allows communication between the steering circuit 50 and the first hydraulic pump 21. And, the bleed-down position D is a position that allows communication between the steering circuit 50 and the hydraulic fluid tank 23, and also blocks communication between the hoist circuit 40 and the first hydraulic pump 21. The third position C is a position that blocks communication between the steering circuit 50 and the first hydraulic pump 21. And, the third position C is a position that blocks communication between the steering circuit 50 and the hydraulic fluid tank 23, and allows communication between the hoist circuit 40 and the first hydraulic pump 21.

According to this configuration, even if the hydraulic source is only the first hydraulic pump 21, when the composite control valve 30C is in the bleed-down position D (second position), pressure oil supply from the first hydraulic pump 21 to the steering circuit 50 becomes possible. Furthermore, by switching between the first position N and the third position C of the composite control valve 30C, the supply destination of the pressure oil from the first hydraulic pump 21 can be switched.

### [Fourth Embodiment]

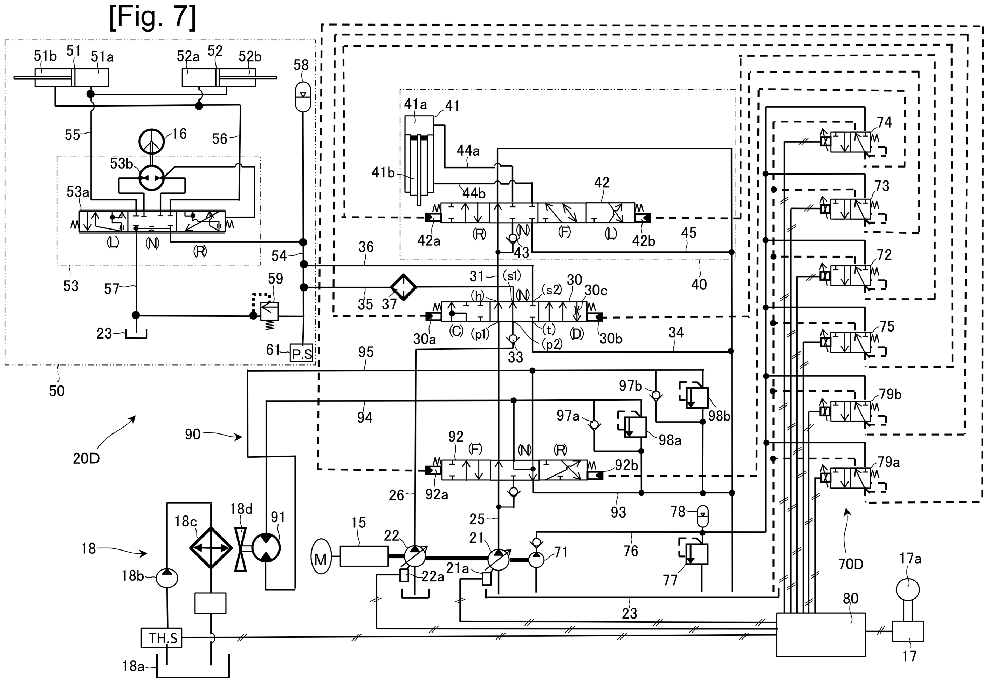

Next, the hauling vehicle according to the fourth embodiment of the present invention will be described with reference to FIG. 7. FIG. 7 is a hydraulic circuit diagram showing the configuration of the hydraulic system provided in the hauling vehicle according to the fourth embodiment. In FIG. 7, parts with the same reference numerals as those shown in FIGS. 1 to 6 are similar parts, and detailed descriptions thereof are omitted.

The difference between the hauling vehicle according to the fourth embodiment and the modification example of the first embodiment is that a cooling water system 18 for the prime mover 15 has been added, and with the addition of the cooling water system 18, a fan circuit 90 has been added to the hydraulic system 20D. The other configurations of the hauling vehicle according to the fourth embodiment are similar to the hydraulic system 20A of the hauling vehicle in the modification example of the first embodiment (see FIG. 4), and their descriptions are omitted.

The cooling water system 18 according to the fourth embodiment includes a cooling water tank 18a for storing cooling water, a cooling water circulation pump 18b for sucking and discharging the cooling water in the cooling water tank 18a, and a radiator 18c for cooling the cooling water with cooling air. The cooling water system 18 can circulate the cooling water within the system by the cooling water circulation pump 18b. The cooling air supplied to the radiator 18c is generated by the cooling fan 18d.

The hydraulic system 20D according to the fourth embodiment includes a fan circuit 90 for driving the cooling fan 18d. The fan circuit 90 includes a hydraulic motor 91 driven by the pressure oil supplied from the first hydraulic pump 21 and a cooling fan 18d rotationally driven by the hydraulic motor 91. Furthermore, the fan circuit 90 includes a fan control valve 92 that controls the flow of pressure oil supplied from the first hydraulic pump 21 to the hydraulic motor 91 and the flow of pressure oil discharged from the hydraulic motor 91 to the hydraulic fluid tank 23. The fan control valve 92, composite control valve 30, and hoist control valve 42 are connected in tandem along the center bypass line 31. The fan control valve 92 is positioned upstream of the composite control valve 30.

The return oil from the hydraulic motor 91 is discharged to the hydraulic fluid tank 23 through the return oil passage 93. The inlet and outlet (suction port and discharge port) of the hydraulic motor 91 are connected to the fan control valve 92 via a pair of motor oil passages 94, 95. Between the motor oil passages 94, 95 and the return oil passage 93, a pair of makeup check valves 97a, 97b are provided. When the hydraulic motor 91 rotates inertially or is rotated by traveling wind, a negative pressure may occur within the motor oil passages 94, 95. At this time, due to the action of the check valves 97a, 97b, the hydraulic fluid in the hydraulic fluid tank 23 is replenished into the motor oil passages 94, 95 via the return oil passage 93. Between the motor oil passages 94, 95 and the return oil passage 93, a pair of relief valves 98a, 98b are provided. If the pressure within the pair of motor oil passages 94, 95 exceeds a predetermined value, the relief valves 98a, 98b discharge the hydraulic fluid to the hydraulic fluid tank 23, protecting the hydraulic equipment of the fan circuit 90.

The fan control valve 92 is configured, for example, by a 6-port 3-position hydraulic pilot-operated directional control valve. The fan control valve 92 is configured using a single directional control valve and has pressure receiving sections 92a, 92b where pilot pressure is input on both left and right sides. The fan control valve 92 is a switching valve that can be switched to the forward rotation position F, reverse rotation position R, and neutral position N. Under normal conditions, both pressure receiving sections 92a, 92b of the fan control valve 92 are connected to the hydraulic fluid tank 23 and are held in the neutral position N by a centering spring.

When the fan control valve 92 is in the neutral position N, the first hydraulic pump 21 and the composite control valve 30 are in communication, and the communication between the first hydraulic pump 21 and the hydraulic motor 91 is cut off. As a result, the hydraulic fluid discharged from the first hydraulic pump 21 is supplied to the composite control valve 30 through the fan control valve 92. Therefore, through the composite control valve 30, pressure oil supply from the first hydraulic pump 21 to the hoist circuit 40 becomes possible.

When the fan control valve 92 is in the forward rotation position F, the pressure oil discharged from the first hydraulic pump 21 is supplied to the hydraulic motor 91 through the motor oil passage 94, and the hydraulic motor 91 rotates in the forward direction. The pressure oil discharged from the hydraulic motor 91 is discharged to the hydraulic fluid tank 23 through the motor oil passage 95 and the fan control valve 92. Also, when the fan control valve 92 is in the reverse rotation position R, the hydraulic fluid discharged from the first hydraulic pump 21 is supplied to the hydraulic motor 91 through the motor oil passage 95, and the hydraulic motor 91 rotates in the reverse direction. The hydraulic fluid discharged from the hydraulic motor 91 is discharged to the hydraulic fluid tank 23 through the motor oil passage 94 and the fan control valve 92.

In this way, the forward rotation position F and the reverse rotation position R are rotation positions where the hydraulic motor 91 is rotated by the pressure oil discharged from the first hydraulic pump 21. When the fan control valve 92 is in the rotation positions F, R, the communication between the first hydraulic pump 21 and the composite control valve 30 via the center bypass line 31 is cut off. Therefore, the supply of pressure oil from the first hydraulic pump 21 to the hoist circuit 40 becomes impossible.

On the other hand, the second hydraulic pump 22 is connected to the composite control valve 30 bypassing the fan control valve 92. Therefore, the flow of pressure oil supplied from the second hydraulic pump 22 to the composite control valve 30 is not affected by the operation of the fan control valve 92. That is, the supply of pressure oil from the second hydraulic pump 22 to the steering circuit 50 is not affected by the addition of the fan circuit 90.

The fan control valve 92 is configured to be switched by the pilot pressure generated by the solenoid valves 79a, 79b of the pilot circuit 70D. And, the fan control valve 92 switches among the three switching positions: forward rotation position F, reverse rotation position R, and neutral position N, in response to the control signal from the control device 80.

According to the aforementioned fourth embodiment, similar to the modification example of the first embodiment described earlier, the simultaneous occurrence of pressure oil release from the accumulator 58 of the steering circuit 50 to the hydraulic fluid tank 23 and the cutoff of pressure oil supply from the hydraulic source 21 to the steering circuit 50 is avoided.

Furthermore, the dump truck 1 (hauling vehicle) according to this embodiment includes a hydraulic motor 91 driven by pressure oil supplied from the first hydraulic pump 21 and a cooling fan 18d rotationally driven by the hydraulic motor 91. Additionally, the dump truck 1 is equipped with a fan control valve 92 that controls the flow of pressure oil supplied from the first hydraulic pump 21 to the hydraulic motor 91. The fan control valve 92 and the composite control valve 30 are connected in tandem on a bypass line 31 that connects the first hydraulic pump 21 and the hydraulic fluid tank 23, with the composite control valve 30 positioned downstream of the fan control valve 92. The second hydraulic pump 22 is connected to the composite control valve 30, bypassing the fan control valve 92.

According to this configuration, the fan control valve 92, which controls the hydraulic motor 91 for driving the cooling fan 18d, can be interposed between the first hydraulic pump 21 and the composite control valve 30 without affecting the supply of pressure oil from the second hydraulic pump 22 to the steering circuit 50.

### [Other Embodiments]

It should be noted that the present invention is not limited to the first to fourth embodiments described above, and various modifications are included. The embodiments described above are detailed to clearly explain the present invention and are not necessarily limited to all the configurations described. For example, it is possible to replace a part of the configuration of one embodiment with the configuration of another embodiment, and it is also possible to add the configuration of another embodiment to the configuration of one embodiment. Additionally, it is possible to add, delete, or replace parts of the configuration of each embodiment with other configurations.

For example, in the first to fourth embodiments described above, an example configuration where the hoist control valve 42 is a single directional control valve was shown. However, the hoist control valve can also be configured by combining the first control valve and the second control valve. For example, the first control valve and the second control valve can be configured using a 6-port 3-position directional control valve, and the first control valve and the second control valve are connected in parallel. The first control valve is configured to switch between three positions: neutral position N, raise position R, and float position F. The second control valve is configured to switch between three positions: neutral position N, raise position R, and lower position L. This configuration allows the drive of the hoist cylinder 41 to be controlled in the same manner as a single hoist control valve 42.

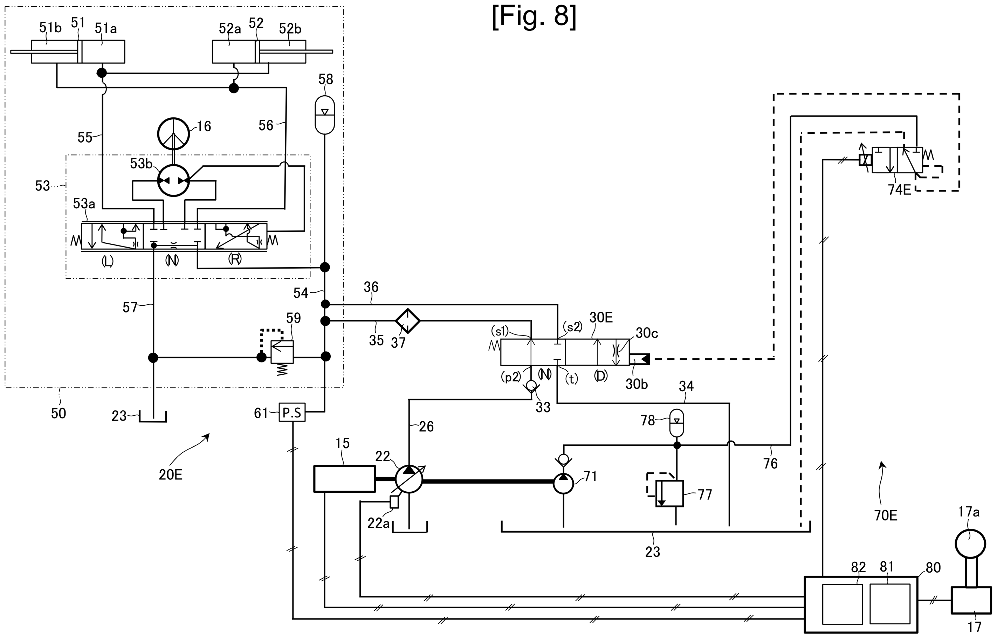

In the embodiments described above, examples were shown where the hydraulic systems 20, 20A, 20B, 20C, and 20D include a hoist circuit 40. However, as shown in FIG. 8, the hydraulic system 20E can also be configured without the hoist circuit 40 (see FIG. 2, FIG. 4 to FIG. 7). FIG. 8 is a hydraulic circuit diagram showing the configuration of a hydraulic system included in a hauling vehicle according to another embodiment.

In the hydraulic system 20E without a hoist circuit, the first hydraulic pump (see FIG. 2) that supplies pressure oil to the hoist circuit 40 is also unnecessary. The composite control valve 30E has a supply position N for supplying pressure oil from the second hydraulic pump 22 to the steering circuit 50, and a bleed-down position D for discharging pressure oil from the accumulator 58 of the steering circuit 50 to the hydraulic fluid tank 23. That is, the composite control valve 30E is a single control valve that combines two functions: the supply of pressure oil from the second hydraulic pump 22 to the steering circuit 50, and the bleed-down of the accumulator 58.

The composite control valve 30E is configured, for example, by a 4-port 2-position hydraulic pilot-type directional control valve and has a pressure receiving section 30b where pilot pressure is input on one side. The composite control valve 30E has, for example, a second pump port p2 connected to the second hydraulic pump 22 via the second discharge line 26, and a tank port t connected to the hydraulic fluid tank 23 via the return oil passage 34. Furthermore, the composite control valve 30E is connected to the steering circuit 50 via the first connection line 35, enabling communication between the steering circuit 50 and the second hydraulic pump 22 through the first steering port s1, and is connected to the steering circuit 50 via the second connection line 36, enabling communication between the steering circuit 50 and the hydraulic fluid tank 23 through the second steering port s2. The composite control valve 30E is normally held in the supply position N by a spring. The composite control valve 30E is configured to be switched to the bleed-down position D by the pilot pressure generated by the solenoid valve 74E of the pilot circuit 70E.

The supply position N of the composite control valve 30E is a position that guides the pressure oil discharged from the second hydraulic pump 22 to the steering circuit 50. In detail, the supply position N is a position that allows communication between the steering circuit 50 and the second hydraulic pump 22 while blocking communication between the steering circuit 50 and the hydraulic fluid tank 23.

The bleed-down position D of the composite control valve 30E is a position that guides the pressure oil from the accumulator 58 (steering circuit 50) to the hydraulic fluid tank 23. And the bleed-down position D is a position that allows the supply of pressure oil from the second hydraulic pump 22 to the steering circuit 50. In detail, the bleed-down position D is a position that allows communication between the steering circuit 50 and the second hydraulic pump 22, as well as communication between the steering circuit 50 and the hydraulic fluid tank 23. The composite control valve 30E has a throttle 30c in the oil passage that allows communication between the steering circuit 50 and the hydraulic fluid tank 23 at the bleed-down position **D.** The throttle 30c functions as a fluid resistance for the pressure oil flowing from the second hydraulic pump 22 to the hydraulic fluid tank 23 via the composite control valve 30E.

Even in such a hydraulic system 20E without a hoist circuit, the steering circuit 50 is configured to be connected to the second hydraulic pump 22 (hydraulic source) and the hydraulic fluid tank 23 via the composite control valve 30E. The composite control valve 30E has a supply position N (first position) that allows communication between the steering circuit 50 and the second hydraulic pump 22 (hydraulic source) while blocking communication between the steering circuit 50 and the hydraulic fluid tank 23. Furthermore, the composite control valve 30E has a bleed-down position D (second position) that allows communication between the steering circuit 50 and the second hydraulic pump 22 (hydraulic source), as well as communication between the steering circuit 50 and the hydraulic fluid tank 23 to discharge the pressure oil from the accumulator 58 to the hydraulic fluid tank 23. The composite control valve 30E has a throttle 30c in the oil passage that allows communication between the steering circuit 50 and the hydraulic fluid tank 23 at the bleed-down position D (second position).

According to this configuration, the bleed-down position D (second position) of the composite control valve 30E, which allows the release of pressure oil (bleed-down) from the accumulator 58 of the steering circuit 50 to the hydraulic fluid tank 23, enables communication between the steering circuit 50 and the second hydraulic pump 22, allowing the supply of pressure oil from the second hydraulic pump 22 to the steering circuit 50 side via the composite control valve 30E. Furthermore, the throttle 30c at the bleed-down position D (second position) becomes the fluid resistance of the pressure oil flow from the second hydraulic pump 22 to the hydraulic fluid tank 23 via the composite control valve 30E. Therefore, the simultaneous occurrence of pressure oil release from the accumulator 58 of the steering circuit 50 to the hydraulic fluid tank 23 and the interruption of pressure oil supply from the hydraulic source 22 to the steering circuit 50 is avoided.

### Description of Reference Characters

1: Dump truck (hauling vehicle), 2: Front wheel (steering wheel), 5: Load-carrying platform, 18d: Cooling fan, 21: First hydraulic pump (hydraulic source), 22: Second hydraulic pump (hydraulic source), 23: Hydraulic fluid tank, 30,30B,30C,30E: Composite control valve, 31: Center bypass line (bypass line), 35: First connection line (first line), 36: Second connection line (second line), 37: Filter, 40: Hoist circuit, 41: Hoist cylinder, 50: Steering circuit, 51,52: Steering cylinder, 53: Steering valve, 58: Accumulator, 91: Hydraulic motor, 92: Fan control valve, s1: First steering port, s2: Second steering port, N: Neutral position, non-confluence position, supply position (first position), D: Bleed-down position (second position), C: Confluence position (third position)

## Claims

1. A hauling vehicle comprising:
a hydraulic fluid tank for storing hydraulic fluid,
a hydraulic source for supplying the hydraulic fluid in the hydraulic fluid tank as high-pressure oil,
a steering circuit that includes a steering cylinder that extends and compresses to steer steering wheels by the pressure oil supplied from the hydraulic source, a steering valve that controls the flow of pressure oil supplied from the hydraulic source to the steering cylinder, and an accumulator capable of storing the pressure oil supplied from the hydraulic source and supplying the stored pressure oil to the steering cylinder via the steering valve;
wherein the steering circuit is configured to be connected to the hydraulic source and the hydraulic fluid tank via a composite control valve;
wherein the composite control valve has a first position that allows communication between the steering circuit and the hydraulic source while blocking communication between the steering circuit and the hydraulic fluid tank, and a second position that allows communication between the steering circuit and the hydraulic source while also allowing communication between the steering circuit and the hydraulic fluid tank to discharge the pressure oil from the accumulator into the hydraulic fluid tank; and
wherein the composite control valve, in the second position, has a throttle in the oil passage that allows communication between the steering circuit and the hydraulic fluid tank.

2. The hauling vehicle according to claim 1;
wherein the steering circuit is connected to the composite control valve via parallel first and second lines;
wherein the first line is connected to a side of a first steering port, the first steering port being a port that allows communication between the steering circuit and the hydraulic source in the composite control valve;
wherein the second line is connected to a side of a second steering port, the second steering port being a port that allows communication between the steering circuit and the hydraulic fluid tank in the composite control valve; and
wherein a filter for removing foreign matter in the pressure oil is attached only in the first line among the first and second lines.

3. The hauling vehicle according to claim 1, comprising:
a hoist circuit that is connected to the hydraulic source via the composite control valve and includes a hoist cylinder that extends and compresses to raise and lower the load-carrying platform by the pressure oil supplied from the hydraulic source;
wherein the composite control valve, in addition to the first position and the second position, has a third position that blocks the communication between the steering circuit and the hydraulic source, blocks the communication between the steering circuit and the hydraulic fluid tank, and allows communication between the hoist circuit and the hydraulic source.

4. The hauling vehicle according to claim 3;
wherein the hydraulic source is composed of a single hydraulic pump;
wherein the first position of the composite control valve is a position that allows communication between the steering circuit and the hydraulic pump while blocking communication between the steering circuit and the hydraulic fluid tank, and blocking communication between the hoist circuit and the hydraulic pump;
wherein the second position of the composite control valve is a position that allows communication between the steering circuit and the hydraulic pump while allowing communication between the steering circuit and the hydraulic fluid tank, and blocking communication between the hoist circuit and the hydraulic pump; and
wherein the third position of the composite control valve is a position that blocks communication between the steering circuit and the hydraulic pump, blocks communication between the steering circuit and the hydraulic fluid tank, and allows communication between the hoist circuit and the hydraulic pump.

5. The hauling vehicle according to claim 3;
wherein the hydraulic source is composed of a first hydraulic pump and a second hydraulic pump;
wherein the first position of the composite control valve is a position that allows communication between the steering circuit and only the second hydraulic pump of the hydraulic source while blocking communication between the steering circuit and the hydraulic fluid tank, and allowing communication between the hoist circuit and only the first hydraulic pump of the hydraulic source;
wherein the second position of the composite control valve is a position that allows communication between the steering circuit and at least the second hydraulic pump of the hydraulic source while allowing communication between the steering circuit and the hydraulic fluid tank, and blocking communication between the hoist circuit and at least the second hydraulic pump of the hydraulic source; and
wherein the third position of the composite control valve is a position that blocks communication between the steering circuit and both the first and second hydraulic pumps, blocks communication between the steering circuit and the hydraulic fluid tank, and allows communication between the hoist circuit and both the first and second hydraulic pumps.

6. The hauling vehicle according to claim 5;
wherein the second position of the composite control valve is a position that allows communication between the steering circuit and only the second hydraulic pump of the hydraulic source while allowing communication between the steering circuit and the hydraulic fluid tank, and allowing communication between the hoist circuit and only the first hydraulic pump of the hydraulic source.

7. The hauling vehicle according to claim 5;
wherein the second position of the composite control valve is a position that allows communication between the steering circuit and both the first and second hydraulic pumps, allows communication between the steering circuit and the hydraulic fluid tank, and blocks communication between the hoist circuit and both the first and second hydraulic pumps.

8. The hauling vehicle according to claim 5, comprising:
a hydraulic motor that drives a cooling fan by the pressure oil supplied from the first hydraulic pump, and
a fan control valve that controls the flow of pressure oil supplied from the first hydraulic pump to the hydraulic motor;
wherein the fan control valve and the composite control valve are connected in tandem on a bypass line connecting the first hydraulic pump and the hydraulic fluid tank;
wherein the composite control valve is arranged downstream of the fan control valve; and
wherein the second hydraulic pump is connected to the composite control valve bypassing the fan control valve.
